# FASCICULE DE BREVET EUROPEEN

(11) **EP 2 316 318 B1**
(45) Date de publication et mention de la délivrance du brevet: **03.04.2013**
(21) Numéro de dépôt: 10305976.2
(22) Date de dépôt: 10.09.2010
(51) Int. Cl.: A47J 45/06, A47J 45/07, A47J 45/00

(54) **Poignée d'article culinaire avec coussin déformable**
Griff eines Kochartikels mit formbarem Polster
Handle of a cooking appliance with deformable padding

(30) Priorité: 27.10.2009 FR 0905156
(43) Date de publication de la demande: 04.05.2011
(73) Titulaire: SEB S.A., 69130 Ecully (FR)
(72) Inventeur: PASQUINI, Ludovic, 74000 Annecy (FR)
(74) Mandataire: Bourrières, Patrice

(56) Documents cités:
- EP-A1- 0 742 083
- US-A1- 2003 029 002
- US-A1- 2006 021 196

## Description

La présente invention concerne une poignée pour un article culinaire tel qu'une casserole, une poêle, etc.

On connaît du document EP0742083 une poignée comportant une structure rigide et des inserts surmoulés sur la structure. Ces inserts sont positionnés sur la structure rigide dans les zones d'application des doigts. Les inserts ont une dureté inférieure à 60 shores, préférentiellement 50 shores.

Une construction de poignée avec un insert d'une telle dureté ne permet pas une réelle déformation de l'insert nécessaire pour l'adaptation à la forme de la main de l'utilisateur lors de la saisie et de la manipulation de la poignée.

Pour obtenir une réelle déformation de l'insert, la dureté de cet insert doit être plus faible par exemple inférieure à 20 shores. Cependant un insert d'une telle dureté vieillira rapidement du fait de sa fragilité vis-à-vis de chocs avec d'autres ustensiles ou vis-à-vis des agressions de tampons de nettoyage ou du lave vaisselle.

On connaît du document US2003029002, une poignée comportant une structure rigide et des inserts surmoulés sur la structure. Ces inserts sont positionnés sur la structure rigide dans les zones d'application des doigts. Les inserts comportent une enveloppe souple dans laquelle sont maintenus des billes solides.

Une construction de poignée avec un insert d'une telle configuration permet une réelle déformation de l'insert mais présente des difficultés de mise en oeuvre lorsque l'insert n'est pas en place directement sur la poignée. En effet, par l'aspect granulaire de sa structure interne, un tel insert rapporté présente des déformations au montage, le rendant difficile. De plus, le maintien de ladite structure dans le temps est aléatoire. Enfin, ce type de montage ne fournit pas un toucher régulier sans discontinuité par l'effet de déplacement des billes solides.

Le but de la présente invention est de remédier aux inconvénients précités et de proposer une poignée pour un article culinaire présentant un meilleur confort et une ergonomie optimisée permettant une adaptation de la forme de la poignée à la forme de la main de l'utilisateur.

Un autre but de l'invention est de proposer une poignée pour un article culinaire durable dans le temps.

Un autre but de l'invention est de proposer une poignée pour un article culinaire qui soit de conception simple et économique à mettre en oeuvre.

Ces buts sont atteints avec une poignée d'article culinaire comportant un corps rigide relié à l'article culinaire et au moins un coussin déformable, caractérisée en ce que ledit coussin comporte une peau en silicone destinée à être en contact avec la main, ladite peau délimitant un réceptacle contenant un noyau solide dont la dureté shore est inférieure à la dureté de ladite peau.

En d'autres termes, on obtient une poignée présentant localement une structure sandwich peau du coussin, noyau souple, corps rigide. Ainsi lors de la préhension de la poignée, la peau et le noyau se déforment sous la pression de la main. Cette déformation permet une adaptation de la forme de la poignée à la forme de la main, ce qui améliore la prise en main et le confort de la poignée.

De préférence, la peau en silicone a une dureté comprise entre 30 et 60 shores, de préférence 50 shores.

Une telle peau en silicone présente l'avantage de posséder une bonne résistance mécanique et de présenter un toucher et une prise en main très agréables. Par bonne résistance, on entend une résistance aux coupures vis-à-vis de chocs avec d'autres ustensiles ou bien aux rayures ou usures vis-à-vis des agressions de tampons de nettoyage.

Avantageusement, le noyau a une dureté comprise entre 3 et 20 shores, de préférence 5 shores.

De préférence, le noyau a une épaisseur comprise entre 2 et 8 millimètres, de préférence 5 millimètres.

Ces dispositions permettent une réelle déformation du noyau supérieure à un millimètre pour autoriser une adaptation de la forme de la poignée à la forme de la main et ainsi obtenir une sensation de confort.

Avantageusement, la peau en silicone a une épaisseur comprise entre un demi millimètre et deux millimètres, de préférence un millimètre.

Cette disposition garantit une bonne souplesse de la peau, tout en assurant une bonne résistance.

De préférence, le coussin est fixé dans une cavité de réception prévue sur la surface extérieure du corps rigide.

Cette disposition permet d'obtenir une poignée dont la surface externe ne présente aucune aspérité, nuisible à la prise en main. De plus, ce type de montage par encastrement dans une cavité de la poignée garantit un bon maintien du coussin.

Avantageusement, le coussin est fixé dans la cavité de réception par collage.

Cette disposition permet d'obtenir une liaison intime entre le coussin et la poignée et ainsi d'éviter dans la zone de fixation les pénétrations et rétentions d'eau ou autres salissures.

De préférence, la peau du coussin comporte une paroi sensiblement plane en contact avec la main et une paroi périphérique s'étendant transversalement à ladite paroi plane.

Cette disposition permet à la peau du coussin d'avoir une forme de réceptacle dans lequel la matière liquide du noyau peut être versée avant son durcissement.

Avantageusement, la peau en silicone du coussin est translucide.

Cette disposition permet de visualiser la couleur du noyau à travers la peau qui sert de protection contre les agressions possibles lors de l'utilisation de l'article culinaire. Ainsi, le rendu de la couleur du coussin sera conservé au fil du temps.

De préférence, le coussin comporte une paroi de fond.

L'invention sera mieux comprise à l'étude des modes de réalisation pris à titre nullement limitatif et illustrés dans les figures annexées dans lesquelles :
- La figure 1 illustre une vue en perspective d'une poignée pour un article culinaire selon un mode particulier de réalisation de l'invention.
- La figure 2 illustre une section selon la ligne II-II de la poignée de la figure 1.
- La figure 3 illustre une vue en perspective du coussin seul de la poignée de la figure 1.
- La figure 4 illustre une section selon la ligne IV-IV du coussin de la figure 3.
- La figure 5 illustre une vue en perspective d'une poignée pour un article culinaire selon un autre mode de réalisation de l'invention.
- La figure 6 illustre une section selon la ligne VI-VI de la poignée de la figure 5.

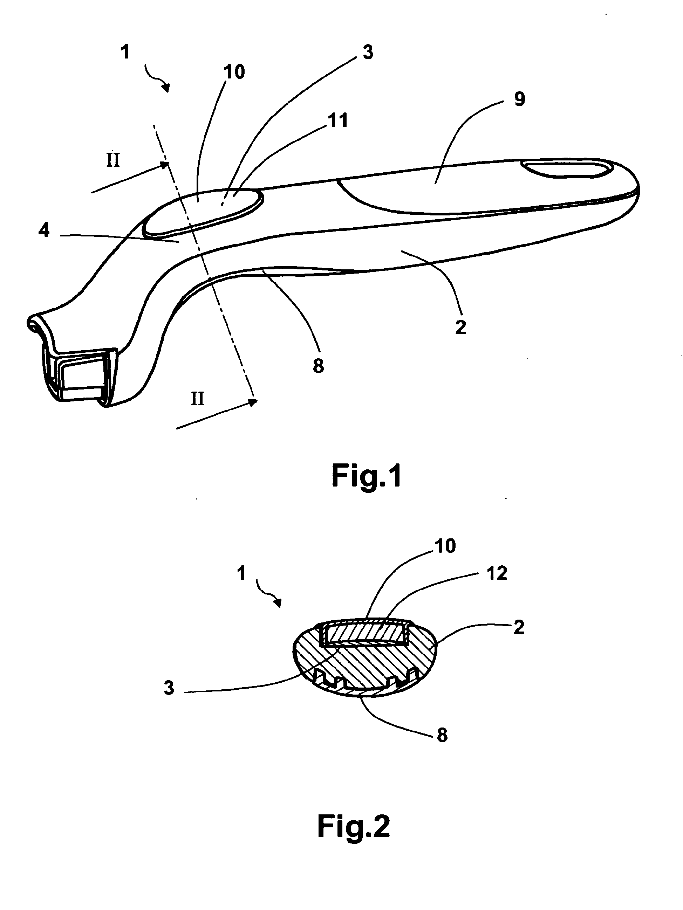

La figure 1 représente une poignée 1 pour un article culinaire tel qu'une casserole ou une poêle. L'article culinaire et la fixation de la poignée sur cet article culinaire sont réalisés de manière connue en soi et ne sont pas représentés.

La poignée 1 comprend un corps 2 de forme allongée de section sensiblement ovale. Le corps 2 de la poignée 1 est réalisé par moulage dans une matière du type « Bakélite® ». Le corps 2 comporte une partie antérieure supérieure 4 comprenant un coussin 10, disposé en face de la zone d'appui du pouce de la main lors de la saisie de la poignée 1.

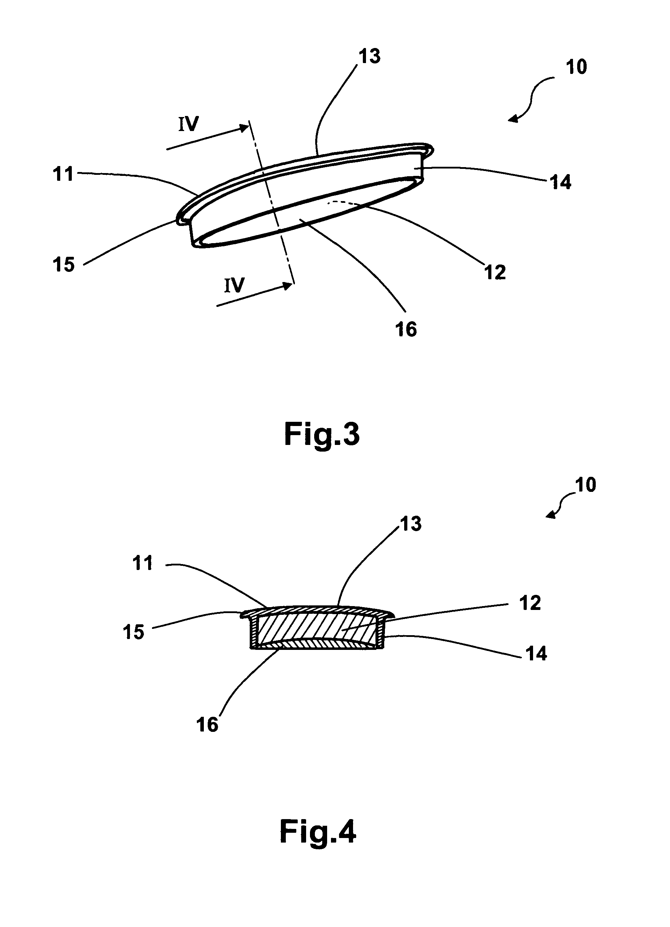

Tel que visible aux figures 3 et 4, le coussin 10 a une forme ovale de section sensiblement rectangulaire. Le coussin 10 comporte une peau 11 en silicone et un noyau 12.

La peau 11 du coussin 10 comporte une paroi 13 sensiblement plane en contact avec la main, de forme ovale et une paroi périphérique 14 située légèrement en retrait à l'intérieur de la forme ovale et s'étendant transversalement à ladite paroi 13 sensiblement plane. La position en retrait de la paroi périphérique 14 définit une lèvre 15 sur le pourtour de la paroi 13 sensiblement plane. La peau 11 en silicone a une dureté préférentiellement de 50 shores et une épaisseur d'environ un millimètre.

La peau 11 du coussin 10 forme ainsi un réceptacle. Pour réaliser le coussin 10, on remplit ce réceptacle avec un silicone en phase liquide qui va durcir dans le temps pour former le noyau 12. Le but est d'obtenir un noyau 12 solide d'une dureté préférentiellement de cinq shores et d'une épaisseur d'environ cinq millimètres, définie par la hauteur de la paroi périphérique 14.

Lors du séchage, la surface formée par le silicone liquide en contact avec l'air, ne va pas rester plane et une légère dépression va se créer en son centre. Selon une variante de réalisation du noyau 12, un remplissage de cette dépression est réalisé avec le même type de silicone liquide pour former une paroi de fond 16 plane après durcissement.

Un tel coussin 10 réalisé entièrement en silicone permet d'obtenir une tenue en température d'environ 220 degrés C, proche de la tenue en température du corps 2 de poignée en « Bakélite® » qui est d'environ 230 degrés C. En utilisation, la température atteinte par le coussin est au maximum de 70 degrés C, garantissant ainsi une bonne durabilité de la poignée.

Tel que visible aux figures 1 et 2, le corps 2 de la poignée 1 comporte en sa partie antérieure supérieure 4 une cavité 3 située en face de la zone d'appui du pouce de la main. Le coussin 10 est rapporté dans cette cavité 3 par collage.

La cavité 3 est dimensionnée pour recevoir la forme externe du coussin 10 sans ménager d'espace libre où pourraient se loger des liquides ou autres salissures. La lèvre 15 dont la section s'amincit vers l'extérieur de la paroi 13 plane assure une jonction sans aspérité entre le corps 2 de la poignée et le coussin 10 et renforce l'étanchéité de l'assemblage.

La cavité 3 comporte un fond plat qui reçoit sans aucun jeu la paroi de fond 16 du coussin. Ainsi, lors de la pression du doigt sur le coussin, la déformation de la peau et du noyau provoque une sensation agréable qui n'est pas perturbée par d'autres déformations parasites du type déformation de bulles d'air qui auraient pu être emprisonnées.

La paroi 13 plane du coussin présente une surface d'environ 400 millimètres carré qui offre un excellent compromis entre une réelle déformation du coussin pour un bon confort et une bonne prise en main. Cette surface correspond environ à la surface d'appui du pouce sur la poignée lors de la prise en main de l'article culinaire.

De manière préférentielle, le silicone du noyau 12 est coloré et la peau 11 en silicone du coussin 10 est translucide. Ceci permet de visualiser la couleur du noyau 12 tout en assurant sa protection. La paroi de fond 16 peut être colorée en blanc. Cette disposition permet de conserver visuellement la couleur du noyau 12. En effet, la matière du noyau n'étant pas totalement opaque, cette paroi de fond 16 blanche empêche la couleur du corps 2 de la poignée d'altérer la couleur du noyau 12 perçue par l'utilisateur.

Pour améliorer la prise main, des inserts silicone 8, 9 sont ajoutés sur le corps 2 de la poignée par collage ou surmoulage.

Dans une variante de réalisation, les inserts 8, 9 sont remplacés par des coussins selon l'invention.

En utilisation, la main de l'utilisateur saisit la poignée 1 en positionnant son pouce sur le coussin 10. Lors de la prise de la poignée, la pression exercée par le pouce sur le coussin 10 déforme la peau 11 en silicone et le noyau 12, améliorant ainsi le confort de la poignée.

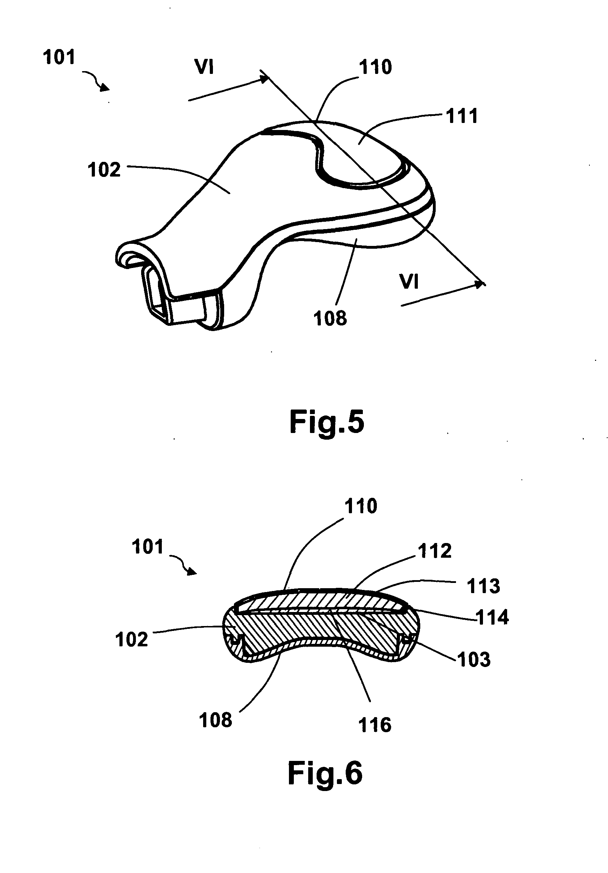

Les figures 5 et 6 illustrent un autre mode de réalisation de l'invention et se rapportent à une poignée 101 pour une casserole ou un faitout. Ce type d'article culinaire comporte généralement un récipient équipé dans sa partie supérieure extérieure de deux poignées diamétralement opposées : une droite et une gauche.

La poignée 101 comprend un corps 102 comportant une partie supérieure comprenant un coussin 110, disposé en face de la zone d'appui du pouce de la main lors de la saisie de la poignée 101. Le coussin 110 a une forme ovale de section sensiblement rectangulaire disposée transversalement à la poignée. Ceci permet d'obtenir une poignée droite et une poignée gauche identiques, une partie du coussin recevant le pouce droit pour la poignée droite et l'autre partie du coussin recevant le pouce gauche pour la poignée gauche.

Le coussin 110 a une construction identique au coussin 10 et comporte une peau 111 en silicone et un noyau 112. La peau 111 du coussin 110 comporte une paroi 113 sensiblement plane en contact avec la main et une paroi périphérique 114. Le coussin comporte une paroi de fond 116.

Le corps 102 de la poignée 101 comporte en sa partie supérieure une cavité 103 située en face de la zone d'appui du pouce de la main. Le coussin 110 est rapporté dans cette cavité 103 par collage.

Pour améliorer la prise main, un insert silicone 108, est ajouté sur le corps 102 de la poignée par collage ou surmoulage.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation de l'invention, le noyau peut être surmoulé dans le corps de poignée et la peau en contact avec la main rapportée soit par une autre opération de surmoulage, soit par collage.

## Revendications

1. Poignée (1, 101) d'article culinaire comportant un corps (2, 102) rigide relié à l'article culinaire et au moins un coussin (10, 110) déformable, **caractérisée en ce que** ledit coussin (10, 110) comporte une peau (11, 111) en silicone destinée à être en contact avec la main, ladite peau (11, 111) délimitant un réceptacle contenant un noyau (12, 112) solide dont la dureté shore est inférieure à la dureté de ladite peau (11, 111), ledit noyau (12, 112) remplissant ledit réceptacle.

2. Poignée (1, 101) d'article culinaire selon la revendication 1, **caractérisée en ce que** la peau (11, 111) en silicone a une dureté comprise entre 30 et 60 shores, de préférence 50 shores.

3. Poignée (1, 101) d'article culinaire selon l'une quelconque des revendications 1 à 2, **caractérisée en ce que** le noyau (12, 112) a une dureté comprise entre 3 et 20 shores, de préférence 5 shores.

4. Poignée (1, 101) d'article culinaire selon l'une quelconque des revendications 1 à 3, **caractérisée en ce que** le noyau (12, 112) a une épaisseur comprise entre 2 et 8 millimètres, de préférence 5 millimètres.

5. Poignée (1, 101) d'article culinaire selon l'une quelconque des revendications 1 à 4, **caractérisée en ce que** la peau (11, 111) en silicone a une épaisseur comprise entre un demi millimètre et deux millimètres, de préférence un millimètre.

6. Poignée (1, 101) d'article culinaire selon l'une quelconque des revendications 1 à 5, **caractérisée en ce que** le coussin (10, 110) est fixé dans une cavité de réception (3, 103) prévue sur la surface extérieure du corps (2, 102) rigide.

7. Poignée (1, 101) d'article culinaire selon la revendication 6, **caractérisée en ce que** le coussin (10, 110) est fixé dans la cavité de réception (3, 103) par collage.

8. Poignée (1, 101) d'article culinaire selon l'une quelconque des revendications 1 à 7, **caractérisée en ce que** la peau (11, 111) du coussin (10, 110) comporte une paroi (13, 113) sensiblement plane en contact avec la main et une paroi périphérique (14, 114) s'étendant transversalement à ladite paroi (13, 113) plane pour former un réceptacle.

9. Poignée (1, 101) d'article culinaire selon l'une quelconque des revendications 1 à 8, **caractérisée en ce que** la peau (11, 111) en silicone du coussin (10, 110) est translucide.

10. Poignée (1, 101) d'article culinaire selon l'une quelconque des revendications 1 à 9, **caractérisée en ce que** le coussin (10, 110) comporte une paroi de fond (16,116).

## Claims

1. A handle (1, 101) for cookware having a rigid body (2, 102) connected to the cookware and to at least one deformable pad (10, 110), **characterised in that** said pad (10, 110) comprises a silicone skin (11, 111) intended to be in contact with the hand, said skin (11, 111) delimiting a receptacle containing a solid core (12, 112) with shore hardness less than the hardness of said skin (11, 111), said core (12, 112) filling said receptacle.

2. A handle (1, 101) for cookware according to claim 1, **characterised in that** the silicone skin (11, 111) has a hardness between 30 and 60 Shore, preferably 50 Shore.

3. A handle (1, 101) for cookware according to any one of claims 1 to 2, **characterised in that** the core (12, 112) has a hardness between 3 and 20 Shore, preferably 5 Shore.

4. A handle (1, 101) for cookware according to any one of claims 1 to 3, **characterised in that** the core (12, 112) has a thickness between 2 and 8 millimetres, preferably 5 millimetres.

5. A handle (1, 101) for cookware according to any one of claims 1 to 4, **characterised in that** the silicone skin (11, 111) has a thickness between a half millimetre and 2 millimetres, preferably one millimetre.

6. A handle (1, 101) for cookware according to any one of claims 1 to 5, **characterised in that** the pad (10, 110) is fixed in a receiving cavity (3, 103) arranged on the outer surface of the rigid body (2, 102).

7. A handle (1, 101) for cookware according to claim 6, **characterised in that** the pad (10, 110) is fixed in the receiving cavity (3, 103) by gluing.

8. A handle (1, 101) for cookware according to any one of claims 1 to 7, **characterised in that** the skin (11, 111) of the pad (10, 110) contains a substantially plane wall (13, 113) in contact with the hand and a peripheral wall (14, 114) extending transversally to said plane wall (13, 113) to form a receptacle.

9. A handle (1, 101) for cookware according to any one of claims 1 to 8, **characterised in that** the silicone skin (11, 111) of the pad (10, 110) is translucent.

10. A handle (1, 101) for cookware according to any one of claims 1 to 9, **characterised in that** the pad (10, 110) has a bottom wall (16, 116).

## Patentansprüche

1. Griff (1, 101) eines Kochartikels, umfassend einen starren Körper (2, 102), der mit dem Kochartikel verbunden ist, und wenigstens ein verformbares Kissen (10, 110), **dadurch gekennzeichnet, dass** das Kissen (10, 110) eine Haut (11, 111) aus Silikon umfasst, die dazu bestimmt ist, mit der Hand in Kontakt zu sein, wobei die Haut (11, 111) ein Behältnis begrenzt, das einen festen Kern (12, 112) enthält, dessen Shore-Härte geringer ist als die Härte der Haut (11, 111), wobei der Kern (12, 112) das Behältnis ausfüllt.

2. Griff (1, 101) eines Kochartikels nach Anspruch 1, **dadurch gekennzeichnet, dass** die Haut (11, 111) aus Silikon eine Härte aufweist, die zwischen 30 und 60 Shore, vorzugsweise 50 Shore, beträgt.

3. Griff (1, 101) eines Kochartikels nach einem der Ansprüche 1 bis 2, **dadurch gekennzeichnet, dass** der Kern (12, 112) eine Härte aufweist, die zwischen 3 und 20 Shore, vorzugsweise 5 Shore, beträgt.

4. Griff (1, 101) eines Kochartikels nach einem der Ansprüche 1 bis 3, **dadurch gekennzeichnet, dass** der Kern (12, 112) eine Dicke aufweist, die zwischen 2 und 8 Millimeter, vorzugsweise 5 Millimeter, beträgt.

5. Griff (1, 101) eines Kochartikels nach einem der Ansprüche 1 bis 4, **dadurch gekennzeichnet, dass** die Haut (11, 111) aus Silikon eine Dicke aufweist, die zwischen einem halben Millimeter und zwei Millimeter, vorzugsweise einen Millimeter, beträgt.

6. Griff (1, 101) eines Kochartikels nach einem der Ansprüche 1 bis 5, **dadurch gekennzeichnet, dass** das Kissen (10, 110) in einem Aufnahmehohlraum (3, 103) befestigt ist, der auf der Außenoberfläche des starren Körpers (2, 102) vorgesehen ist.

7. Griff (1, 101) eines Kochartikels nach Anspruch 6, **dadurch gekennzeichnet, dass** das Kissen (10, 110) im Aufnahmehohlraum (3, 103) mittels Verkleben befestigt ist.

8. Griff (1, 101) eines Kochartikels nach einem der Ansprüche 1 bis 7, **dadurch gekennzeichnet, dass** die Haut (11, 111) des Kissens (10, 110) eine im Wesentlichen ebene Wand (13, 113), die mit der Hand in Kontakt ist, und eine umlaufende Wand (14, 114) umfasst, die sich quer zur ebenen Wand (13, 113) erstreckt, um ein Behältnis zu bilden.

9. Griff (1, 101) eines Kochartikels nach einem der Ansprüche 1 bis 8, **dadurch gekennzeichnet, dass** die Haut (11, 111) aus Silikon des Kissens (10, 110) lichtdurchlässig ist.

10. Griff (1, 101) eines Kochartikels nach einem der Ansprüche 1 bis 9, **dadurch gekennzeichnet, dass** das Kissen (10, 110) eine Bodenwand (16, 116) umfasst.
